# EUROPEAN PATENT APPLICATION

(11) **EP 4 765 438 A1**
(43) Date of publication of application: **24.06.2026**
(21) Application number: 25849629.8
(22) Date of filing: 29.04.2025
(51) Int. Cl.: H01M 50/503, H01R 13/52

(54) **BATTERY DEVICE, ENERGY STORAGE DEVICE AND ELECTRICAL DEVICE**

(30) Priority: 30.09.2024 CN 202411387990
(71) Applicant: Contemporary Amperex Technology Co., Limited, Ningde, Fujian 352100 (CN)
(72) Inventor: YANG, Zhouwei, Ningde, Fujian 352100 (CN)
(74) Representative: Kraus & Lederer PartGmbB
(86) International application number: PCT/CN2025/092150
(87) International publication number: WO 2026/066074

(57) **Abstract**

The present application provides a battery apparatus, an energy storage apparatus, and an electric apparatus. A battery apparatus (200) includes a battery cell (300) and an electronic control assembly (400). The electronic control assembly includes a circuit board (51), a housing (40), and a covering structure (53). The circuit board is provided with a connector receptacle (52). The housing (40) is provided with an accommodating cavity (401), the circuit board (51) is installed in the accommodating cavity (401), and the housing (40) is provided with an opening (402) for the connector receptacle (52) to extend out. The covering structure (53) is disposed on the housing (40) and at least partially covers a gap (403) between the connector receptacle (52) and a side wall of the opening (402). The gap (403) between the connector receptacle (52) and the side wall of the opening (402) is covered, reduced, or occluded by using the covering structure (53), so that the electronic control assembly meets requirements of a required protection level.

## Description

The present application claims the priority of Chinese Patent Application No. 202411387990.9, filed with the China National Intellectual Property Administration on September 30, 2024, entitled "Battery Apparatus, Energy Storage Apparatus, and Electric Apparatus", the entire content of which is incorporated herein by reference.

### TECHNICAL FIELD

The present application belongs to the technical field of batteries, and in particular, to a battery apparatus, an energy storage apparatus, and an electric apparatus.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

A battery management system generally includes a case, a circuit board, and a lid body. A connector receptacle is provided on the circuit board to be connected to a circuit in a battery apparatus or to be connected to an external circuit. The circuit board is installed in the case, the lid body is capped on the case, and the lid body is provided with an opening for the connector receptacle to extend out to be connected to a corresponding circuit. However, due to tolerances of components, it is difficult to control a gap between the connector receptacle and a side wall of the opening, making it difficult for the battery management system to meet requirements of a specified protection level.

### SUMMARY

An objective of embodiments of the present application is to provide a battery apparatus, an energy storage apparatus, and an electric apparatus, to alleviate a problem in the related art that it is difficult to control a gap between a connector receptacle and a side wall of a corresponding opening on a lid body, making it difficult for the battery management system to meet requirements of a specified protection level.

In a first aspect, an embodiment of the present application provides a battery apparatus, comprising a battery cell and an electronic control assembly electrically connected to the battery cell. The electronic control assembly comprises:
a circuit board provided with an accommodating cavity, wherein the circuit board is provided with a connector receptacle;
a housing provided with an accommodating cavity, wherein the circuit board is installed in the accommodating cavity, and the housing is provided with an opening for the connector receptacle to extend out; and
a covering structure disposed on the housing and surrounding the connector receptacle, wherein the covering structure at least partially covers a gap between the connector receptacle and a side wall of the opening.

In the technical solutions of the embodiments of the present application, the covering structure is provided to be installed on the housing, the covering structure is supported by using the housing, the covering structure surrounds the connector receptacle, and the covering structure at least partially covers the gap between the connector receptacle and the side wall of the opening, and thus the gap between the connector receptacle and the side wall of the opening can be covered, reduced, or occluded according to requirements of a protection level, so that the electronic control assembly meets requirements of the required protection level. In addition, the opening can be made relatively large in size to allow the connector receptacle to pass through the opening, so as to reduce the impact of dimensional chain tolerances on the assembly of the connector receptacle, and reduce the risk of the side wall of the opening interfering with the connector receptacle.

In some embodiments, the covering structure comprises an elastic member, one side of the elastic member is connected to the housing, and the other side of the elastic member at least partially covers the gap.

By using the elastic member, one side of the elastic member is connected to the housing to facilitate support of the elastic member by using the housing, and the other side of the elastic member at least partially covers the gap between the connector receptacle and the side wall of the opening, which can facilitate assembly, and in particular, due to elastic deformation characteristics of the elastic member, the elastic member can be well matched with the gap between the connector receptacle and the side wall of the opening, which alleviates a problem of accumulation of dimensional tolerances between components, thereby better enabling the electronic control assembly to meet requirements of the required protection level.

In some embodiments, at least one side of the connector receptacle is provided with the elastic member, one side of the elastic member is connected to the housing, and the other side of the elastic member covers at least a portion of the gap on the corresponding side of the connector receptacle.

At least one side of the connector receptacle is provided with the elastic member, and the gap on the corresponding side of the connector receptacle can be covered by using the elastic member, so that the corresponding side of the connector receptacle meets requirements of the required protection level.

In some embodiments, the side that is of the elastic member and that is close to the connector receptacle is connected to a rigid member.

By providing the rigid member to be combined with the elastic member, an elastically stretchable structure can be implemented to alleviate accumulation of dimensional tolerances between components. The arrangement of the rigid member can further improve structural strength, as long as side matching of the rigid member and the connector receptacle is well controlled, which is convenient for production and manufacturing, and improves qualification rate.

In some embodiments, the rigid member extends to a position between the connector receptacle and the side wall of the opening.

By extending the rigid member to a position between the connector receptacle and the side wall of the opening, the gap between the connector receptacle and the side wall of the opening can be better covered to adjust the size of the gap, so that the electronic control assembly meets requirements of the required protection level.

In some embodiments, the rigid member is integrally injection-molded with the elastic member.

The rigid member and the elastic member are injection-molded into one piece to facilitate connection between the rigid member and the elastic member and make processing and manufacturing convenient.

In some embodiments, the rigid member has an inner bore, and the connector receptacle passes through the inner bore, so that the rigid member is fittingly sleeved onto the connector receptacle.

The rigid member is provided with the inner bore and is sleeved onto the connector receptacle. As long as the contour of the connector receptacle and the size of the inner bore of the rigid member are controlled during production, an assembly gap can be well controlled when the rigid member is sleeved onto the connector receptacle, resulting in high production efficiency and improved production qualification rate.

In some embodiments, the difference between the distance between two opposite side walls of the inner bore and the distance between two corresponding opposite sides of the connector receptacle is less than or equal to 1 mm.

By making the difference between the distance between two opposite sides of the inner bore and the distance between two corresponding sides of the connector receptacle less than or equal to 1 mm, the electronic control assembly can meet requirements of protection level IP40.

In some embodiments, there are a plurality of rigid members, and the plurality of rigid members cooperate to surround the connector receptacle.

The plurality of rigid members are used to be combined to cooperate to surround the connector receptacle, which is convenient for design, and the plurality of rigid members can be used selectively as needed to form connector receptacles matched with different shapes.

In some embodiments, the elastic member elastically abuts against the connector receptacle.

By making the elastic member abut against the connector receptacle, the gap between the connector receptacle and the side wall of the opening can be well occluded, so that the electronic control assembly meets requirements of the required protection level.

In some embodiments, the elastic member is provided with an aperture for the connector receptacle to pass through.

The elastic member is provided with the aperture to be sleeved onto the connector receptacle, which can facilitate adjustment of the gap between the peripheral side of the connector receptacle and the side wall of the opening, so that the electronic control assembly can better meet requirements of the required protection level.

In some embodiments, the elastic member is an elastic film, or the elastic member is a rubber ring.

The elastic member uses the elastic film, which is low in cost and only needs a simple aperture, and the aperture has a low size accuracy requirement, making it convenient for the elastic member to be sleeved onto the connector receptacle.

The elastic member uses a rubber ring, which is low in cost and convenient to assemble.

In some embodiments, the elastic member is adhesively connected to the housing.

The elastic member is adhesively connected to the housing to facilitate assembly of the elastic member and support of the elastic member by using the housing.

In some embodiments, the elastic member is integrally injection-molded with the housing.

The elastic member and the housing are injection-molded into one piece to facilitate good fixation of the elastic member and the housing and make processing and manufacturing convenient.

In some embodiments, the elastic member comprises a connection portion and an extension portion, a side of the connection portion is connected to the housing, the extension portion is connected to the side that is of the connection portion and that is close to the connector receptacle, and the extension portion extends in the thickness direction of the connection portion.

The elastic member is provided with the connection portion to facilitate connection to the housing, and the extension portion is provided to make the extension portion extend toward one side or two opposite sides of the connection portion, which can increase structural strength of the extension portion in the thickness direction of the connection portion, so as to cover the gap between the connector receptacle and the side wall of the opening, improve product qualification rate, and make the electronic control assembly meet requirements of the required protection level.

In some embodiments, the connection portion is connected to the surface that is of the housing and that faces away from the circuit board, or the connection portion is connected to the surface that is of the housing and that faces the circuit board.

The connection portion is connected to the surface that is of the housing and that faces away from the circuit board, which facilitates assembly of the elastic member, and in particular, the elastic member can be assembled after the connector receptacle extends out of the opening of the housing, which facilitates installation of the elastic member.

By connecting the connection portion to the surface that is of the housing and that faces the circuit board, the elastic member can be first assembled with the housing, and then the connector receptacle can be assembled with the housing, which can facilitate overall assembly of the electronic control assembly.

In some embodiments, the covering structure is adhesively connected to a side wall of the connector receptacle.

By adhesively connecting the covering structure to the side wall of the connector receptacle, the gap between the connector receptacle and the side wall of the opening can be well sealed, so that the electronic control assembly meets requirements of the required protection level.

In some embodiments, the covering structure comprises a sealant filled in the gap.

By using the sealant, the gap between the connector receptacle and the side wall of the opening can be well sealed, so that the electronic control assembly meets requirements of the required protection level.

In some embodiments, the covering structure comprises a covering body. The covering body is connected to the housing, and the covering body at least partially covers the gap.

By using the covering body, the gap between the connector receptacle and the side wall of the opening can be covered through the covering body, so that the electronic control assembly meets requirements of the required protection level.

In some embodiments, the housing comprises a first case and a second case, and the first case and the second case enclose the accommodating cavity; and the first case is provided with the opening, and/or the second case is provided with the opening, and/or the first case and the second case are cooperatively provided with the opening.

The foregoing housing has a simple structure, is convenient to process and manufacture, and is further convenient to assemble the circuit board.

In some embodiments, there are a plurality of connector receptacles, and covering structures corresponding to at least two adjacent connector receptacles are connected into one piece.

Covering structures of at least two adjacent connector receptacles are connected into one piece, which can facilitate connection and assembly of the covering structures and the housing.

In some embodiments, pins of the connector receptacle are connected to the circuit board through surface mount technology.

The pins of the connector receptacle are connected to the circuit board through surface mount technology, which is convenient for assembly and mass production.

In a second aspect, an embodiment of the present application provides an energy storage apparatus, comprising the battery apparatus as described in the foregoing embodiments, and the battery apparatus is used to store or provide electric energy.

In a third aspect, an embodiment of the present application provides an electric apparatus, comprising the battery apparatus as described in the foregoing embodiments or the energy storage apparatus as described in the foregoing embodiment, and the battery apparatus is used to store or provide electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

To describe the technical solutions in the embodiments of the present application more clearly, a brief description of the accompanying drawings needed for describing the embodiments or the exemplary technology is provided. It is clear that the accompanying drawings described below are merely some embodiments of the present application. Those of ordinary skill in the art can still derive other accompanying drawings from these accompanying drawings without creative efforts.
FIG. 1 is a schematic structural diagram of a vehicle according to some embodiments of the present application;
FIG. 2 is a schematic diagram of a structure of a charging network according to some embodiments of the present application;
FIG. 3 is a schematic diagram of a structure of an energy storage system according to some embodiments of the present application;
FIG. 4 is a schematic diagram of a structure of an energy storage apparatus according to some embodiments of the present application;
FIG. 5 is a schematic diagram of an exploded structure of a battery apparatus according to some embodiments of the present application;
FIG. 6 is a schematic diagram of a structure of an electronic control assembly according to some embodiments of the present application;
FIG. 7 is a schematic diagram of a structure of the electronic control assembly in FIG. 6 after a housing is removed;
FIG. 8 is a front view of the structure of the electronic control assembly in FIG. 6;
FIG. 9 is a partial cross-sectional view 1 of the structure along line A-A in FIG. 8;
FIG. 10 is an enlarged view of a covering structure in FIG. 8;
FIG. 11 is a partial cross-sectional view 2 of the structure along line A-A in FIG. 8;
FIG. 12 is a partial cross-sectional view 3 of the structure along line A-A in FIG. 8;
FIG. 13 is a partial cross-sectional view 4 of the structure along line A-A in FIG. 8;
FIG. 14 is a partial cross-sectional view 5 of the structure along line A-A in FIG. 8;
FIG. 15 is a partial cross-sectional view 6 of the structure along line A-A in FIG. 8; and
FIG. 16 is a front view of a structure of an electronic control assembly according to some other embodiments of the present application.

In which, main reference signs in the figures:
11. Vehicle; 111. Controller; 112. Motor;
12. Charging network; 121. Charging pile; 122. Connection apparatus;
13. Energy storage system; 131. Power conversion system; 132. Power generation apparatus; 14. Energy storage apparatus; 141. Cabinet body;
200. Battery apparatus; 20. Box body; 21. Cap; 22. Bottom plate; 23. Framework; 24. Reinforcing beam; 241. Mounting beam;
300. Battery cell;
400. Electronic control assembly; 40. Housing; 401. Accommodating cavity; 402. Opening; 403. Gap; 41. First case; 42. Second case; 43. Installing hole; 51. Circuit board; 52. Connector receptacle; 521. Pin; 53. Covering structure; 531. Elastic member; 5310. Aperture; 5311. Connection portion; 5312. Extension portion; 532. Rigid member; 5321. Inner bore; 533. Sealant; 534. Covering body; and 54. Double-faced adhesive.

### DETAILED DESCRIPTION OF PREFERRED EMBODIMENTS

In order to make the technical problem to be solved, technical solution and beneficial effect of the present application clearer, the present application will be further described in detail below with reference to the figures and embodiments. It should be understood that the specific embodiments described herein are only used to explain the present application and are not used to limit the present application.

Unless otherwise defined, all technical and scientific terms used in this specification have the same meaning as commonly understood by those skilled in the art to which the present application belongs; the terms used in this specification are merely for the purpose of describing specific embodiments and are not intended to limit the present application; and the terms "include", "be provided with", and any other variants thereof in the specification, claims, and foregoing brief description of the drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. Thus, a feature defined by "first" and "second" may explicitly or implicitly indicates that the feature is singular or plural.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by those skilled in the art that the embodiments described herein may be combined with other embodiments in any suitable manner.

Unless otherwise specified, all implementations and optional implementations of the present application may be combined with each other to form new technical solutions.

Unless otherwise specified, all technical features and optional technical features of the present application can be combined with each other to form new technical solutions.

In the description of the embodiments of the present application, the term "and/or" merely describes an association relationship of associated objects, indicating that three relationships may exist, for example, A and/or B may mean that A exists alone, both A and B exist, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces). "Several" means one or more unless specifically defined otherwise.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless otherwise explicitly specified and defined, the technical terms "installed", "connected", "connect", "fixed", and the like are to be understood in a broad sense. For example, the connection may be a fixed connection, a detachable connection, or an integral connection; the connection may be a mechanical connection or an electrical connection; or the connection may be a direct connection, or an indirect connection through an intermediate medium, or an internal communication between two elements or interaction between two elements. A person of ordinary skill in the art may understand the specific meanings of the above terms in the embodiments of the present application according to specific situations.

In the description of the embodiment of the present application, unless explicitly specified and defined otherwise, when an element is referred to as being "fixed on" or "disposed on" another element, it may be directly or indirectly on another element. When an element is referred to as being "connected to" another element, it can be directly or indirectly connected to another element.

In the description of the embodiments of the present application, unless explicitly specified and defined otherwise, the technical term "adjacent" refers to being close in position. For example, for three components A₁, A₂ and B, the distance between A₁ and B is greater than the distance between A₂ and B. In this case, A₂ is closer to B than A₁, that is, A₂ is adjacent to B, or B is adjacent to A₂. For another example, when there are a plurality of components C, and the plurality of components C are C₁, C₂, ..., and C_{N} respectively, and when one of the components C, such as C₂, is closer to the component B than the other components C, then B is adjacent to C₂, or C₂ is adjacent to B.

A battery apparatus is generally provided with an electronic control assembly, such as a battery management system or a battery monitoring unit, to collect working information of battery cells in the battery apparatus and control charging and discharging of the battery cells. The electronic control assembly generally includes a circuit board and a housing, and the housing generally includes a case and a lid body. A connector receptacle is provided on the circuit board to be connected to a circuit in a battery apparatus or to be connected to an external circuit. The circuit board is installed in the case, the lid body is capped on the case, and the lid body is provided with an opening for the connector receptacle to extend out to be connected to a corresponding circuit. The structure of such an electronic control assembly has the following dimensional chain tolerances: the dimensional tolerance of the case, the positioning tolerance of connection between the case and the circuit board, the dimensional tolerance of the circuit board itself, the assembly tolerance of the connector receptacle and the circuit board, the dimensional tolerance of the lid body, the positioning tolerance of connection between the lid body and the case, and the like. Accumulation of this series of tolerances makes it difficult to control a gap between the connector receptacle and a side wall of the opening. In the case that the size of the opening in the lid body is matched with the connector receptacle to just meet requirements of a protection level, due to accumulated tolerances of a dimensional chain, it is difficult for the connector receptacle to be inserted into the opening. Even if the connector receptacle is inserted into the opening in some cases, a side wall of the opening is caused to abut against the connector receptacle, causing mutual interference between the connector receptacle and the lid body. A stress on the connector receptacle exerted by the lid body abutting easily causes the circuit board to detach from a welded position at the root of the connector receptacle, thereby affecting performance of the electronic control assembly. Therefore, the size of the opening is generally set to be larger than the size of the outer periphery of the connector receptacle, which makes it difficult for the electronic control assembly to meet requirements of a specified protection level.

Based on the foregoing considerations, in order to alleviate the problem in the related art that it is difficult to control the gap between the connector receptacle and the side wall of the corresponding opening on the housing, making it difficult for the electronic control assembly to meet requirements of the specified protection level, the embodiments of the present application provide a battery apparatus, in which a covering structure is provided on the housing of the electronic control assembly, the covering structure surrounds the connector receptacle and at least partially covers the gap between the connector receptacle and the side wall of the opening. In this way, the opening can be made relatively large in size, so as to reduce impact of dimensional chain tolerances on assembly of the connector receptacle, facilitate the connector receptacle to pass through the opening, and reduce the risk of the side wall of the opening interfering with the connector receptacle. The covering structure at least partially covers the gap between the connector receptacle and the side wall of the opening, and thus the gap between the connector receptacle and the side wall of the opening can be covered, reduced, or occluded according to requirements of the protection level, so that the electronic control assembly meets requirements of the required protection level.

In the embodiments of the present application, the battery cell may be a secondary battery, which refers to a battery cell that may be continuously used by activating an active material by means of charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

The technical solutions described in the embodiments of the present application are all applicable to various electric apparatuses using battery cells, for example, a mobile phone, a portable device, a notebook computer, an electric vehicle, an electric toy, an electric tool, a vehicle, a ship, and a spacecraft, and for example, the spacecraft includes an aircraft, a rocket, a space shuttle, and a spacecraft.

To facilitate the description, as an example for description, provided in an embodiment of the present application is an electric apparatus, and the electric apparatus is a vehicle.

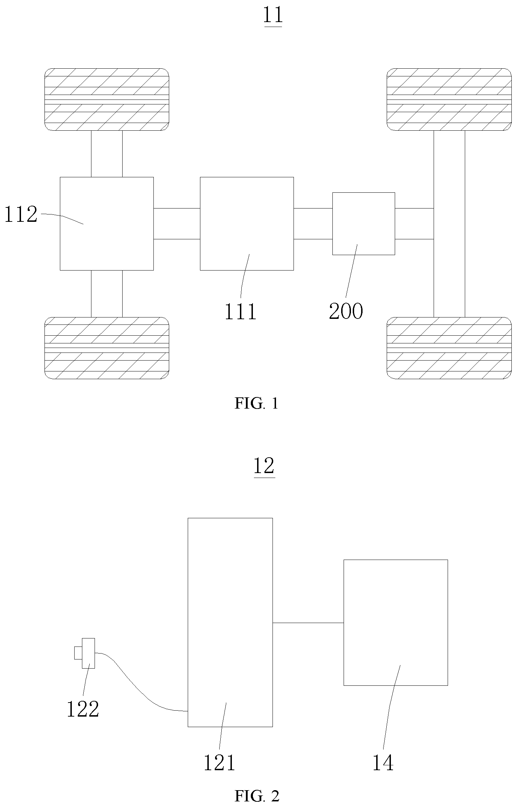

Referring to FIG. 1, FIG. 1 is a schematic diagram of a structure of a vehicle 11 according to some embodiments of the present application. The vehicle 11 may be a fuel vehicle, a gas vehicle, or a new energy vehicle, and the new energy vehicle may be a battery electric vehicle, a hybrid vehicle, or a range-extended electric vehicle. Inside the vehicle 11, a battery apparatus 200 is provided, which may be provided at the bottom, head, or tail of the vehicle 11. The battery apparatus 200 may be used to power the vehicle 11, for example, the battery apparatus 200 may be used as an operating power supply of the vehicle 11. The vehicle 11 may further include a controller 111 and a motor 112, the controller 111 being used to control the battery apparatus 200 to power the motor 112, e.g., for a working power requirement of the vehicle 11 during starting, navigating, and driving.

In some embodiments, the battery apparatus 200 may be used not only as the operating power supply of the vehicle 11, but also as a driving power supply of the vehicle 11, instead of, or partially instead of, fuel or natural gas, to provide driving power for the vehicle 11.

Referring to FIG. 2, the embodiments of the present application provide a charging network 12, including a charging pile 121 and an energy storage apparatus 14, where the charging pile 121 is electrically connected to the energy storage apparatus 14, and the energy storage apparatus 14 is used to provide electric energy for the charging pile 121. The charging pile 121 is electrically connected to the battery apparatus 200 in the energy storage apparatus 14 through a cable, and the battery apparatus 200 can provide electric energy stored by itself to the charging pile 121. The charging pile 121 is provided with one or more connection apparatuses 122 which are used to be connected to an electric device (for example, the vehicle 11), so as to replenish energy to the electric device.

The energy storage apparatus 14 may be located inside the charging pile 121 (for example, an integrated storage and charging machine), or may be located outside the charging pile 121.

In some embodiments, the charging network 12 includes a charging pile 121 and an energy storage system, where the charging pile 121 is electrically connected to the energy storage system, and the energy storage system is used to provide electric energy for the charging pile 121. The charging pile 121 is electrically connected to the battery apparatus 200 in the energy storage system through a cable, and the battery apparatus 200 can provide electric energy stored by itself to the charging pile 121.

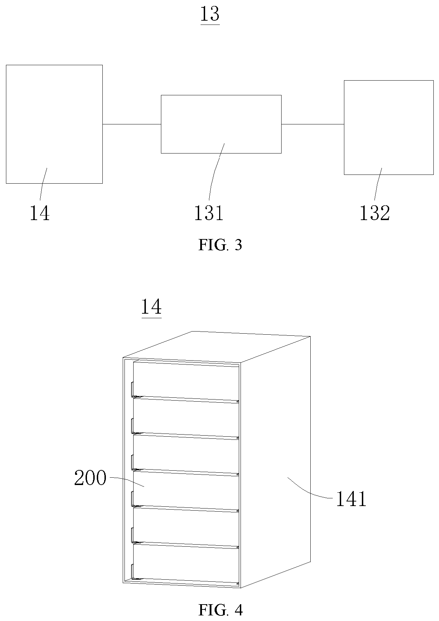

Referring to FIG. 3, the embodiments of the present application provide an energy storage system 13. The energy storage system 13 may include one or more energy storage apparatuses 14 and a power conversion system 131 (PCS) which is connected between a power generation apparatus 132 and the energy storage apparatus 14. The power generation apparatus 132 is used to generate electric energy, and electric energy generated by the power generation apparatus 132 can be stored in the energy storage apparatus 14 through the power conversion system 131. As an example, the power generation apparatus 132 may be a solar panel, a hydro power generation device, a thermal power generation device, a wind power generation device, or the like. The specific type of the power generation apparatus 132 is not limited in the present application.

Referring to FIG. 4, the embodiments of the present application provide an energy storage apparatus 14, including one or more battery clusters to increase voltage and capacity of the energy storage apparatus 14. The battery cluster may include one or more battery apparatuses 200 which are connected in series through a bus component to increase the voltage of the energy storage apparatus 14. When the energy storage apparatus 14 includes a plurality of battery clusters, the plurality of battery clusters are connected in parallel to increase the capacity of the energy storage apparatus 14.

The energy storage apparatus 14 may be used in an energy storage power station, a wind power generation system, a solar power generation system, a mobile power system, a temporary power supply system, or the like. The energy storage apparatus 14 can store electric energy as needed and output electric energy at the appropriate time. For example, the energy storage apparatus 14 can store electric energy during periods of low power consumption, and provide electric energy for relevant users or electric devices during periods of peak power consumption. The energy storage system 13 provided in the embodiments of the present application may be any power system that needs to use the energy storage apparatus 14.

In some embodiments, the energy storage apparatus 14 is an energy storage electric cabinet. Certainly, the energy storage apparatus 14 may alternatively be an energy storage container.

In some embodiments, the energy storage apparatus 14 may include a cabinet body 141 and one or more battery clusters which are accommodated in the cabinet body 141. Certainly, the energy storage apparatus 14 may further include one or more battery apparatuses 200, which are directly accommodated in the cabinet body 141.

In some embodiments, the energy storage apparatus 14 may include modules such as a thermal management module, a main control module, a general control module, a power distribution module, and a fire protection module.

As an example, the thermal management module may include a liquid cooling unit, and the liquid cooling unit provides a cooling liquid for adjusting the temperature of the battery cell to each battery apparatus 200 through a pipeline.

As an example, the main control module may be used as a battery management unit of the battery cluster to monitor and manage the battery cluster. The main control module may monitor information such as the current, voltage, power, or temperature of the battery cluster. For example, the charging and discharging current, voltage, and the like of the battery cluster may be controlled. The main control module includes modules such as a slave battery management unit (SBMU) and a fusion switch.

As an example, the general control module can be used as a battery management unit of the energy storage apparatus 14 to monitor and manage the energy storage apparatus 14. The general control module can monitor information such as current, voltage, power, state of charge, or temperature of the energy storage apparatus 14. For example, the charging and discharging current, voltage, and the like of the energy storage apparatus 14 can be controlled. As an example, the general control module includes modules such as an insulation monitoring module (IMM), a master battery management unit (MBMU), an EtherNet (ETH), and a fiber optic conversion module.

As an example, the fire protection module includes a control panel, a detector, an alarm apparatus, and the like, and is used to perform detection, alarming, or extinguishment on the energy storage system 13.

As an example, the power distribution module may be used to distribute power to a module that requires power in the energy storage apparatus 14.

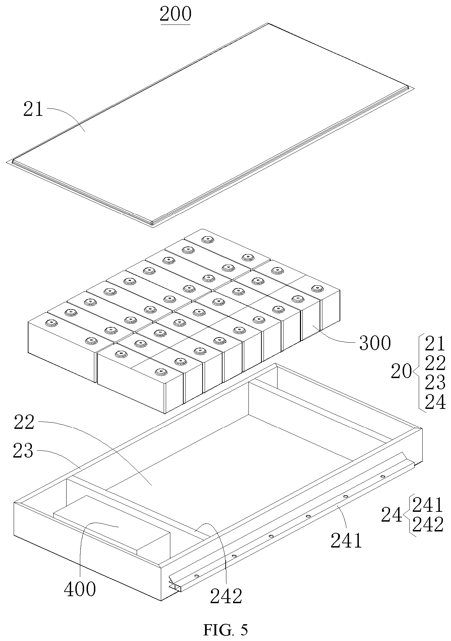

Referring to FIG. 5, the embodiments of the present application provide a battery apparatus 200. The battery apparatus 200 may include one or more battery cell assemblies for providing voltage and capacity. The battery cell assembly may include a plurality of battery cells 300 which are connected in series, in parallel, or in series-parallel through a bus component.

In some embodiments, the battery cell assembly is generally formed by arranging a plurality of battery cells 300.

As an example, the battery cell assembly may be a battery module, and the battery module is an independent module formed by arranging and fixing a plurality of battery cells 300. As an example, the battery module may be formed by bundling a plurality of battery cells 300 through a cable tie.

In some embodiments, the battery apparatus 200 may be a battery pack. The battery pack includes a box body 20 and one or more battery cell assemblies, which are accommodated in the box body 20.

As an example, the battery cell assembly may be a battery module, and the battery cell assembly may be accommodated in the box body 20 by means of fixing the battery module in the box body 20.

As an example, the battery cell assembly may alternatively be accommodated in the box body 20 by means of directly fixing a plurality of battery cells 300 in the box body 20.

In some embodiments, the box body 20 may include a cap 21, a framework 23, and a bottom plate 22. The cap 21 and the bottom plate 22 are respectively connected to two opposite sides of the framework 23, so that a closed space is formed inside the box body 20 to accommodate the battery cell 300. The framework 23 refers to a partial structure forming a peripheral side wall of the box body 20, the cap 21 refers to a plate-like structure forming the top of the box body 20, and the bottom plate 22 refers to a plate-like structure forming the bottom of the box body 20.

In some embodiments, the box body 20 may include a first box body and a second box body, and the first box body and the second box body are fastened, so that a closed space is formed inside the box body 20 to accommodate the battery cell 300. The term "closed" here refers to being covered or shut, which may be sealed or unsealed. The first box body may be a cap or a bottom plate of the box body 20. The first box body and the second box body may each be a hollow structure with an opening on one side, with the opening side of the first box body capping the opening side of the second box body.

In some embodiments, the box body 20 includes a reinforcing beam 24, and the reinforcing beam 24 is connected to the framework 23. The reinforcing beam 24 refers to a structural member disposed on the box body 20 and used to increase structural strength of the box body 20. The reinforcing beam 24 is provided and connected to the framework 23 to enhance structural strength of the box body 20.

In some embodiments, the reinforcing beam 24 includes a mounting beam 242, and the mounting beam 242 is fixedly connected to the framework 23 and is used to be connected to an external device that uses the battery apparatus 200, to support the battery apparatus 200 on the device.

In some embodiments, the reinforcing beam 24 includes an expansion beam 2, and the expansion beam 2 is installed inside the box body 20 to increase structural strength of the box body 20, and may be further used to abut against the battery cell 300 to limit expansion deformation of the battery cell 300.

In some embodiments, the expansion beam 2 may be further connected to the bottom plate 22 of the box body 20 to better fix the expansion beam 2 in the box body 20.

In some embodiments, the battery apparatus 200 includes an electronic control assembly 400, and the electronic control assembly 400 refers to a component in the battery apparatus 200 for monitoring and controlling charging and discharging of the battery cell 300. The electronic control assembly 400 may be a battery management system (BMS), which is a core component responsible for monitoring and managing the state of the battery cell 300. Main functions of the electronic control assembly 400 include: monitoring parameters such as voltage, current, and temperature of the battery cell 300 in real time to ensure that the battery is in a safe working state; balancing a battery level of each battery cell 300 in the battery cell assembly in an active or passive manner to prolong a service life of the battery; controlling and regulating the temperature of the battery cell 300 to avoid performance degradation or safety risks caused by overheating or overcooling; and detecting faults in the battery cell assembly and the BMS, and taking corresponding protection measures, such as cutting off power and giving an alarm. The electronic control assembly 400 may alternatively be a battery monitoring unit (BMU), which is mainly responsible for monitoring basic parameters such as voltage, current and temperature of the battery cell.

In some embodiments, the electronic control assembly 400 may be disposed in the box body 20 to support and protect the electronic control assembly 400 through the box body 20.

As an example, the electronic control assembly 400 may alternatively be disposed outside the box body 20, and be connected to components such as a battery cell 300 and a sensor in the box body 20 through wires.

In some embodiments, the box body 20 may be a portion of a chassis structure of a vehicle. For example, a portion of the box body 20 may be at least a portion of a floor of a vehicle, or a portion of the box body 20 may be at least a portion of a cross beam and a longitudinal beam of a vehicle.

Referring to FIG. 5 to FIG. 10, according to some embodiments of the present application, the present application provides a battery apparatus 200, including a battery cell 300 and an electronic control assembly 400 electrically connected to the battery cell 300. The electronic control assembly 400 includes a housing 40, a circuit board 51, and a covering structure 53. The housing 40 is provided with an accommodating cavity 401; the circuit board 51 is installed in the accommodating cavity 401, and the circuit board 51 is provided with a connector receptacle 52; the housing 40 is provided with an opening 402 for the connector receptacle 52 to extend out; and the covering structure 53 surrounds the connector receptacle 52, the covering structure 53 is disposed on the housing 40, and the covering structure 53 at least partially covers a gap 403 between the connector receptacle 52 and a side wall of the opening 402.

The housing 40 refers to a case structure that forms the external contour of the electronic control assembly 400. The accommodating cavity 401 refers to an accommodating space formed inside the housing 40. The housing 40 may be made of a material such as metal, plastic, fiber, or ceramic.

The opening 402 refers to a through-hole structure disposed on the housing 40. The accommodating cavity 401 is communicated with the outside through the opening 402.

The circuit board 51, also referred to as a printed circuit board (PCB), is an important element in an electronic product for connecting electronic elements. The circuit board is made of an insulating material (such as glass fiber reinforced resin) as a substrate, and has conductive paths (copper foil traces) attached thereto by using etching or other manners to provide electrical connections between electronic elements.

The connector receptacle 52 refers to a structure of a receptacle portion of a connector, which is used to be connected to a connector plug.

The connector receptacle 52 is disposed on the circuit board 51 to be connected to the circuit board 51, the connector receptacle 52 is supported by using the circuit board 51, and the circuit board 51 is electrically connected to the connector receptacle 52.

The circuit board 51 is placed in the accommodating cavity 401, and the circuit board 51 is supported and protected by using the housing 40. Correspondingly, the connector receptacle 52 on the circuit board 51 extends out of the opening 402 to be connected to the connector plug.

In order to make the connector receptacle 52 easily extend out of the opening 402, the size of the opening 402 is made larger than the size of the connector receptacle 52. Thus, the connector receptacle 52 extends out of the opening 402 of the housing 40, and a gap 403 is formed between the connector receptacle 52 and a side wall of the opening 402.

The covering structure 53 refers to a structure used to cover or occlude the gap 403 between the connector receptacle 52 and the side wall of the opening 402. The covering structure 53 is disposed on the housing 40, and the covering structure 53 is supported and fixed by using the housing 40. The covering structure 53 surrounds the connector receptacle 52, so that the covering structure 53 can cover at least a portion of the gap 403 on the peripheral side of the connector receptacle 52, that is, the covering structure 53 can reduce or occlude the gap 403 between the connector receptacle 52 and the side wall of the opening 402. The gap 403 is covered or occluded by using the covering structure 53, and thus the opening 402 can be made relatively large in size, so that the connector receptacle 52 can easily extend out of the opening 402 to reduce interference of the side wall of the opening 402 on the connector receptacle 52 and facilitate assembly, thereby reducing impact of dimensional chain tolerances on assembly of the connector receptacle 52. Through the arrangement of the covering structure 53, the gap 403 can be covered according to requirements of the protection level to adjust the size of the gap 403 on the peripheral side of the connector receptacle 52, thereby meeting requirements of the protection level. For example, the width of the gap 403 on the peripheral side of the connector receptacle 52 can be made to be less than or equal to 1 mm by using the covering structure 53, to meet requirements of protection level IP40.

In the technical solution of the embodiments of the present application, the covering structure 53 is provided to be installed on the housing 40, the covering structure 53 is supported by using the housing 40, the covering structure 53 surrounds the connector receptacle 52, and the covering structure 53 at least partially covers the gap 403 between the connector receptacle 52 and the side wall of the opening 402, and thus the gap 403 between the connector receptacle 52 and the side wall of the opening 402 can be covered, reduced, or occluded according to requirements of the protection level, so that the electronic control assembly 400 meets requirements of the required protection level. In addition, the opening 402 can be made relatively large in size to allow the connector receptacle 52 to pass through the opening 402, to reduce the impact of dimensional chain tolerances on the assembly of the connector receptacle 52, and reduce the risk of the side wall of the opening 402 interfering with the connector receptacle 52.

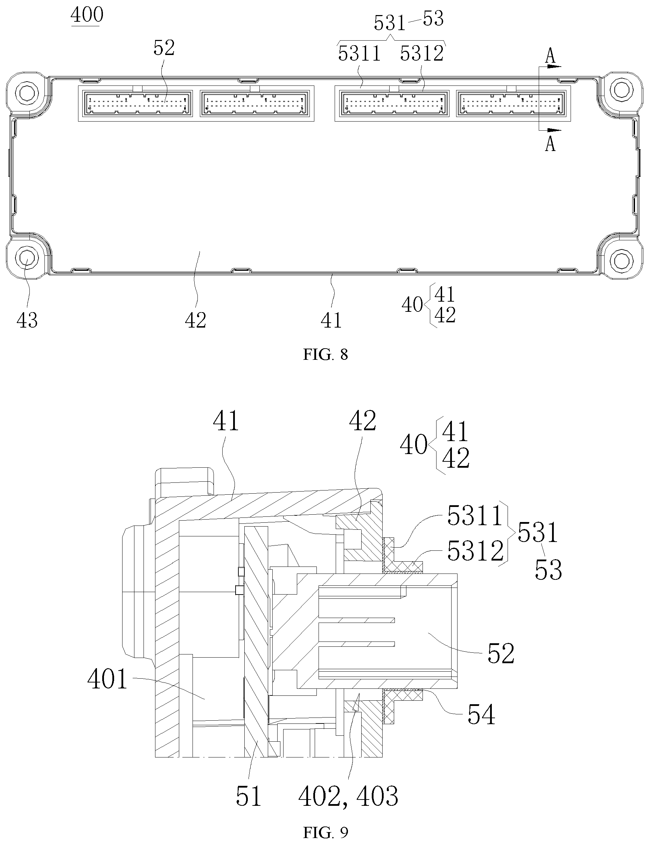

In some embodiments, referring to FIG. 9 to FIG. 14, the covering structure 53 includes an elastic member 531, one side of the elastic member 531 is connected to the housing 40, and the other side of the elastic member 531 at least partially covers the gap 403.

The elastic member 531 refers to a structural member with elasticity, that is, in the case that the elastic member 531 is squeezed, the elastic member 531 is elastically deformed in the squeezing direction, and the length in the squeezing direction decreases. For example, the length of the elastic member 531 in the squeezing direction changes by up to 5% greater than the length thereof, and in the case that a squeezing force disappears, the elastic member 531 can be elastically reset. The elastic member 531 can be stretched and deformed in the case of being subjected to a stretching force, causing the elastic member 531 to lengthen in the direction of the stretching force, and the elastic member 531 can be elastically reset in the case that the stretching force disappears. The elastic member 531 may be made of a material such as rubber or silicone.

One side of the elastic member 531 is connected to the housing 40. For example, the elastic member 531 is adhesively connected to the housing 40, or the elastic member 531 is connected to the housing 40 by a fastener such as a screw. The other side of the elastic member 531 at least partially covers the gap 403 to reduce the size of the gap 403 to meet requirements of the required protection level. The covering structure 53 uses the elastic member 531, and through elasticity of the elastic member 531, the problem of accumulation of dimensional chain tolerances can be alleviated and production qualification rate can be improved.

By using the elastic member 531, one side of the elastic member 531 is connected to the housing 40 to facilitate support of the elastic member 531 by using the housing 40, and the other side of the elastic member 531 at least partially covers the gap 403 between the connector receptacle 52 and the side wall of the opening 402, which can facilitate assembly, and in particular, due to elastic deformation characteristics of the elastic member 531, the elastic member 531 can be well matched with the gap 403 between the connector receptacle 52 and the side wall of the opening 402, which alleviates a problem of accumulation of dimensional tolerances between components, thereby better enabling the electronic control assembly 400 to meet requirements of the required protection level.

In some embodiments, the elastic member 531 surrounds the connector receptacle 52.

The elastic member 531 surrounds the connector receptacle 52, which not only can better alleviate the problem of impact of dimensional chain accumulated tolerances on the peripheral side of the connector receptacle 52, but also can cover or occlude the gap 403 on the peripheral side of the connector receptacle 52 by using the elastic member 531, so as to better meet requirements of the required protection level.

By making the elastic member 531 surround the connector receptacle 52, the gap 403 between the peripheral side of the connector receptacle 52 and the housing 40 can be better adjusted, so that the electronic control assembly 400 meets requirements of the required protection level.

As an example, the elastic member 531 is an integral structure, such as a ring structure or a frame structure, to surround the connector receptacle 52.

As an example, the elastic member 531 may be a plurality of sheet-like or block-like members, and the elastic members 531 are disposed on a side of the connector receptacle 52, so that the plurality of elastic members 531 cooperate to surround the connector receptacle 52.

As an example, there may be one or more elastic members 531, and the covering structure 53 may further include other structural members, such as a plate-like member or a sheet-like member, so as to cooperate with the elastic member 531 to surround the connector receptacle 52.

In some embodiments, the elastic member 531 may also be provided on one or more sides of the connector receptacle 52, that is, the elastic member 531 may be provided on at least one side of the connector receptacle 52, so that the gap 403 on the corresponding side of the connector receptacle 52 is covered by using the elastic member 531, so that the corresponding side of the connector receptacle 52 meets requirements of the required protection level. In other words, at least one side of the connector receptacle 52 is provided with the elastic member 531, one side of the elastic member 531 is connected to the housing 40, and the other side of the elastic member 531 covers at least a portion of the gap 403 on the corresponding side of the connector receptacle 52.

As an example, the elastic member 531 can be provided on one side of the connector receptacle 52 to cover the gap 403 on the side of the connector receptacle 52, and the corresponding gap 403 on the other side of the connector receptacle 52 can be covered or sealed by using a structure such as a plate member or a sealant.

As an example, one side of the elastic member 531 is connected to the housing 40, and the other side of the elastic member 531 covers a portion of the gap 403 on the corresponding side of the connector receptacle 52, that is, there is a distance between the other side of the elastic member 531 and the corresponding side of the connector receptacle 52, so as to meet distance requirements for setting a protection level.

As an example, one side of the elastic member 531 is connected to the housing 40, and the other side of the elastic member 531 covers the entire gap 403 on the corresponding side of the connector receptacle 52. For example, the other side of the elastic member 531 is connected to or abuts against the corresponding side of the connector receptacle 52.

The elastic member 531 is provided on at least one side of the connector receptacle 52, and the gap 403 on the corresponding side of the connector receptacle 52 can be covered by using the elastic member 531, so that the corresponding side of the connector receptacle 52 meets requirements of the required protection level.

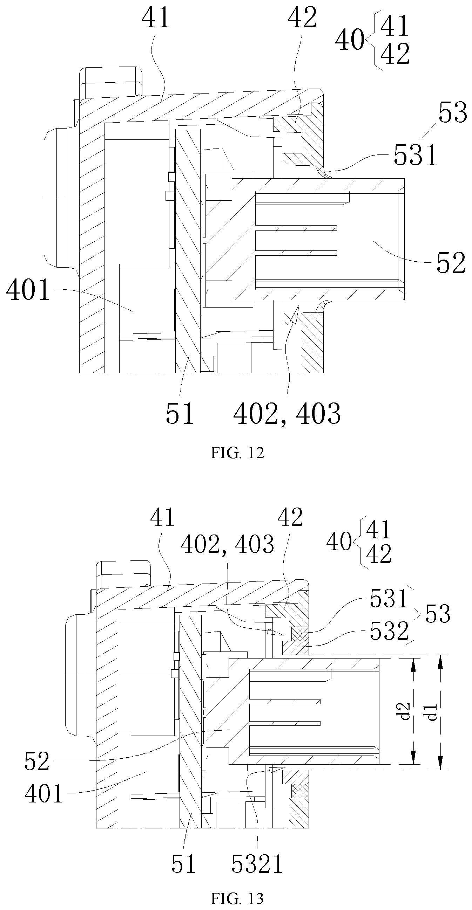

In some embodiments, referring to FIG. 13, the side that is of the elastic member 531 and that is close to the connector receptacle 52 is connected to a rigid member 532.

The rigid member 532 refers to a structural member made of a hard material, that is, in the case of squeezing the rigid member 532, the rigid member 532 is not elastically deformed or is slightly deformed in the squeezing direction. In other words, the length of the rigid member 532 in the squeezing direction does not change, or the length of the rigid member 532 in the squeezing direction changes by 5% less than the length thereof. The rigid member 532 may be a sheet-like member, a block-like member, or the like. The rigid member 532 may be made of a material such as metal, plastic, or hard rubber.

By providing the rigid member 532 to be combined with the elastic member 531, an elastically stretchable structure can be implemented to alleviate accumulation of dimensional tolerances between components. The arrangement of the rigid member 532 can further improve structural strength, as long as side matching of the rigid member 532 and the connector receptacle 52 is well controlled, which is convenient for production and improves the qualification rate.

In some embodiments, referring to FIG. 13, the rigid member 532 extends to a position between the connector receptacle 52 and the side wall of the opening 402.

That the rigid member 532 extends to a position between the connector receptacle 52 and the side wall of the opening 402 means that the rigid member 532 can extend into the gap 403 between the connector receptacle 52 and the side wall of the opening 402, so as to cover or occlude the gap 403.

By extending the rigid member 532 to a position between the connector receptacle 52 and the side wall of the opening 402, the gap 403 between the connector receptacle 52 and the side wall of the opening 402 can be better covered to adjust the size of the gap 403, so that the electronic control assembly 400 meets requirements of the required protection level.

As an example, the rigid member 532 may alternatively be located on the outer side of the housing 40 to cover the gap 403, so as to facilitate position setting of the rigid member 532.

In some embodiments, referring to FIG. 13, the rigid member 532 is integrally injection-molded with the elastic member 531.

That the rigid member 532 is integrally injection-molded with the elastic member 531 means that the rigid member 532 and the elastic member 531 are integrally formed through double injection molding, so that the rigid member 532 and the elastic member 531 are connected and fixed.

The rigid member 532 and the elastic member 531 are injection-molded into one piece to facilitate connection between the rigid member 532 and the elastic member 531 and make processing and manufacturing convenient.

As an example, the rigid member 532 and the elastic member 531 may alternatively be adhesively connected.

As an example, the rigid member 532 and the elastic member 531 may alternatively be connected through a fastener such as a pin.

In some embodiments, referring to FIG. 13, the rigid member 532 has an inner bore 5321, and the connector receptacle 52 passes through the inner bore 5321, so that the rigid member 532 is fittingly sleeved onto the connector receptacle 52.

The inner bore 5321 refers to a through-hole structure disposed in the rigid member 532. The inner bore 5321 is provided on the rigid member 532, so that the rigid member 532 is sleeved onto the connector receptacle 52. The rigid member 532 is fittingly sleeved onto the connector receptacle 52, so that the rigid member 532 covers the gap 403 on the peripheral side of the connector receptacle 52 to meet requirements of the required protection level.

The rigid member 532 is provided with the inner bore 5321, so that the rigid member 532 forms a sleeve-like structure or a frame-like structure as a whole that is matched with the shape of the connector receptacle 52, and is sleeved onto the connector receptacle 52. As long as the contour of the connector receptacle 52 and the size of the inner bore 5321 of the rigid member 532 are controlled during production, an assembly gap 403 can be well controlled when the rigid member 532 is sleeved onto the connector receptacle 52, resulting in high production efficiency and improved production qualification rate.

In some embodiments, referring to FIG. 13, the difference between the distance d1 between two opposite side walls of the inner bore 5321 and the distance d2 between two corresponding opposite sides of the connector receptacle 52 is less than or equal to 1 mm.

The distance d1 between two opposite side walls of the inner bore 5321 refers to the distance between two opposite side walls in any direction perpendicular to the depth of the inner bore 5321.

The distance d2 between two corresponding opposite sides of the connector receptacle 52 refers to the distance between two opposite sides that are in the same direction as two opposite side walls of the inner bore 5321.

By making the difference between the distance d1 between two opposite sides of the inner bore 5321 and the distance d2 between two corresponding sides of the connector receptacle 52 less than or equal to 1 mm, the electronic control assembly 400 can meet requirements of protection level IP40.

In some embodiments, the difference between the distance d1 between two opposite side walls of the inner bore 5321 and the distance d2 between two corresponding opposite sides of the connector receptacle 52 is set to another value to meet requirements of the required protection level.

In some embodiments, there are a plurality of rigid members 532, and the plurality of rigid members 532 cooperate to surround the connector receptacle 52.

The plurality of rigid members 532 are used to be combined to cooperate to surround the connector receptacle 52, which is convenient for design, and the plurality of rigid members 532 can be used selectively as needed to form connector receptacles 52 matched with different shapes.

In some embodiments, the elastic member 531 may abut against the rigid member 532, so that the rigid member 532 abuts against the connector receptacle 52, thereby making the gap 403 on the peripheral side of the connector receptacle 52 relatively small to meet requirements of the required protection level.

As an example, at least one side of the connector receptacle 52 is provided with a rigid member 532, for example, one or more sides of the connector receptacle 52 are provided with a rigid member 532, and other sides of the connector receptacle 52 may be separately provided with a covering structure 53 such as an elastic member 531 or a sheet-like member, so as to cooperate with the rigid member 532 to cover the gap 403 on the peripheral side of the connector receptacle 52, thereby meeting requirements of the specified protection level.

In some embodiments, referring to FIG. 5 to FIG. 12 and FIG. 14, the elastic member 531 elastically abuts against the connector receptacle 52.

By making the elastic member 531 abut against the connector receptacle 52, the gap 403 between the connector receptacle 52 and the side wall of the opening 402 can be well occluded, so that the electronic control assembly 400 meets requirements of the required protection level.

As an example, the elastic member 531 may alternatively be spaced apart from the connector receptacle 52, so that the size and position of the elastic member 531 can be set as needed to meet requirements of the required protection level.

In some embodiments, referring to FIG. 5 to FIG. 12 and FIG. 14, the elastic member 531 is provided with an aperture 5310 for the connector receptacle 52 to pass through.

The aperture 5310 refers to a through-hole structure disposed in the elastic member 531.

The elastic member 531 is provided with the aperture 5310 to be sleeved onto the connector receptacle 52, which can facilitate adjustment of the gap 403 between the peripheral side of the connector receptacle 52 and the side wall of the opening 402, so that the electronic control assembly 400 can better meet requirements of the required protection level.

In some embodiments, the covering structure 53 includes an elastic member 531, one side of the elastic member 531 is connected to the housing 40, and the other side of the elastic member 531 is connected to a side wall of the connector receptacle 52.

In some embodiments, in the case that the covering structure 53 includes an elastic member 531 and a rigid member 532, the rigid member 532 may be disposed on the side that is of the elastic member 531 and that is close to the connector receptacle 52.

In some embodiments, in the case that the covering structure 53 includes an elastic member 531 and a rigid member 532, and the elastic member 531 is provided with an aperture 5310, the rigid member 532 may be disposed in the aperture 5310 of the elastic member 531 and is on the side close to the connector receptacle 52.

In some embodiments, referring to FIG. 9 to FIG. 12, the elastic member 531 is a rubber ring.

The rubber ring refers to a ring-like or frame-like structure with elasticity such as a rubber ring or a sealing ring.

The elastic member 531 uses a rubber ring, which is low in cost and convenient to assemble.

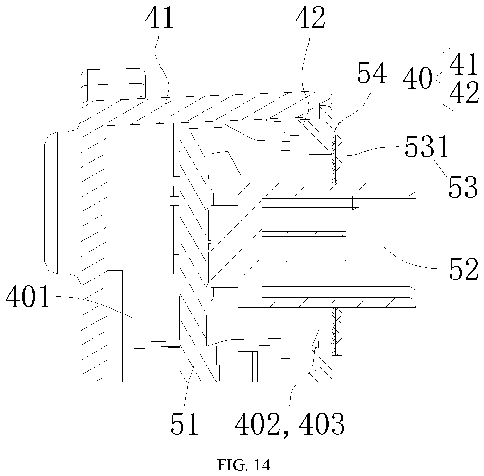

In some embodiments, referring to FIG. 14, the elastic member 531 is an elastic film.

The elastic film refers to a film made of an elastic material, and the elastic material may be rubber, silicone, polyurethane, or the like.

The elastic member 531 uses an elastic film, which is low in cost and only needs a simple aperture 5310. The aperture 5310 has a low size accuracy requirement, making it convenient for the elastic member 531 to be sleeved onto the connector receptacle 52.

In some embodiments, referring to FIG. 5 to FIG. 11 and FIG. 14, the elastic member 531 is adhesively connected to the housing 40.

The elastic member 531 is adhesively connected to the housing 40 to facilitate assembly of the elastic member 531, and the elastic member 531 is supported by using the housing 40.

As an example, the elastic member 531 and the housing 40 may be adhesively connected through a glue solution.

As an example, the elastic member 531 and the housing 40 may be adhesively connected through a double-faced adhesive 54.

In some embodiments, referring to FIG. 12 and FIG. 13, the elastic member 531 is integrally injection-molded with the housing 40.

That the elastic member 531 is integrally injection-molded with the housing 40 means that the housing 40 and the elastic member 531 are integrally formed through double injection molding, so that the housing 40 and the elastic member 531 are connected and fixed.

The elastic member 531 and the housing 40 are injection-molded into one piece to facilitate good fixation of the elastic member 531 and the housing 40 and make processing and manufacturing convenient.

In some embodiments, referring to FIG. 9 to FIG. 11, the elastic member 531 includes a connection portion 5311 and an extension portion 5312, a side of the connection portion 5311 is connected to the housing 40, the extension portion 5312 is connected to the side that is of the connection portion 5311 and that is close to the connector receptacle 52, and the extension portion 5312 extends in the thickness direction of the connection portion 5311.

The connection portion 5311 refers to a partial structure that is of the elastic member 531 and that is connected to the housing 40. The connection portion 5311 is provided to facilitate connection between the elastic member 531 and the housing 40.

The extension portion 5312 refers to a partial structure that is of the elastic member 531 and that is located at a position corresponding to the gap 403. The extension portion 5312 is provided to cover or occlude the gap 403 between the connector receptacle 52 and the side wall of the opening 402.

The extension portion 5312 is connected to the side that is of the connection portion 5311 and that is close to the connector receptacle 52. The extension portion 5312 may be adhesively connected to the connection portion 5311, or the extension portion 5312 may be connected to the connection portion 5311 through a fastener such as a screw. Certainly, the extension portion 5312 and the connection portion 5311 may be integrally molded, so that the extension portion 5312 is connected to the connection portion 5311.

That the extension portion 5312 extends in the thickness direction of the connection portion 5311 means that the extension portion 5312 extends toward one side of the connection portion 5311 in the thickness direction of the connection portion 5311, or the extension portion 5312 extends toward two opposite sides of the connection portion 5311 in the thickness direction of the connection portion 5311. The extension portion 5312 extends toward one side of the connection portion 5311 in the thickness direction of the connection portion 5311, and correspondingly, the cross section of the elastic member 531 is L-shaped; and the extension portion 5312 extends toward two opposite sides of the connection portion 5311 in the thickness direction of the connection portion 5311, and correspondingly, the cross section of the elastic member 531 is T-shaped. The cross section of the elastic member 531 refers to a section of the elastic member in the thickness direction of the connection portion 5311.

The elastic member 531 is provided with the connection portion 5311 to facilitate connection to the housing 40, and the extension portion 5312 is provided and is made to extend toward one side or two opposite sides of the connection portion 5311, which can increase structural strength of the extension portion 5312 in the thickness direction of the connection portion 5311, so as to cover the gap 403 between the connector receptacle 52 and the side wall of the opening 402, improve product qualification rate, and make the electronic control assembly 400 meet requirements of the required protection level.

In some embodiments, referring to FIG. 9, the connection portion 5311 is connected to the surface that is of the housing 40 and that faces away from the circuit board 51.

The circuit board 51 is installed in the housing 40, and two opposite surfaces of the housing 40 of the circuit board 51 are respectively an inner surface and an outer surface of the housing 40, where the inner surface of the housing 40 is the surface that is of the housing 40 and that faces the circuit board 51, and the outer surface of the housing 40 is the surface that is of the housing 40 and that faces away from the circuit board 51.

The connection portion 5311 is connected to the surface that is of the housing 40 and that faces away from the circuit board 51, which facilitates assembly of the elastic member 531, and in particular, the elastic member 531 can be assembled after the connector receptacle 52 extends out of the opening 402 of the housing 40, which facilitates installation of the elastic member 531.

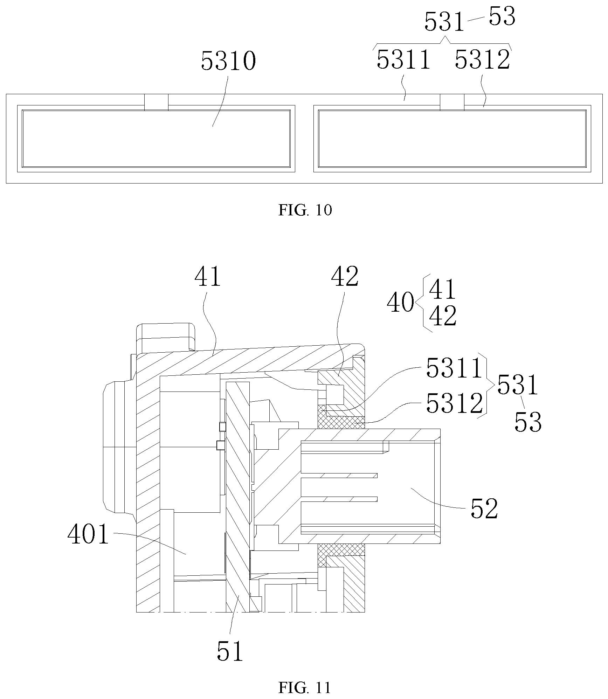

In some embodiments, referring to FIG. 11, the connection portion 5311 is connected to the surface that is of the housing 40 and that faces the circuit board 51.

By connecting the connection portion 5311 to the surface that is of the housing 40 and that faces the circuit board 51, the elastic member 531 can be first assembled with the housing 40, and then the connector receptacle 52 can be assembled with the housing 40, which can facilitate overall assembly of the electronic control assembly 400.

In some embodiments, referring to FIG. 5 to FIG. 11, the covering structure 53 is adhesively connected to a side wall of the connector receptacle 52.

The covering structure 53 is adhesively connected to the side wall of the connector receptacle 52, for example, the covering structure 53 is connected to the side wall of the connector receptacle 52 through a double-faced adhesive 54, and certainly, the covering structure 53 may alternatively be connected to the side wall of the connector receptacle 52 through a glue solution.

As an example, in the case that the covering structure 53 includes the elastic member 531, the elastic member 531 can be adhesively connected to the side wall of the connector receptacle 52.

As an example, in the case that the elastic member 531 includes the extension portion 5312, the extension portion 5312 can be adhesively connected to the side wall of the connector receptacle 52.

As an example, in the case that the covering structure 53 includes the rigid member 532, the rigid member 532 can be adhesively connected to the side wall of the connector receptacle 52.

As an example, in the case that the covering structure 53 includes a sheet-like member or a plate-like member, the corresponding sheet-like member or plate-like member can be adhesively connected to the side wall of the connector receptacle 52.

By adhesively connecting the covering structure 53 to the side wall of the connector receptacle 52, the gap 403 between the connector receptacle 52 and the side wall of the opening 402 can be well sealed, so that the electronic control assembly 400 meets requirements of the required protection level.

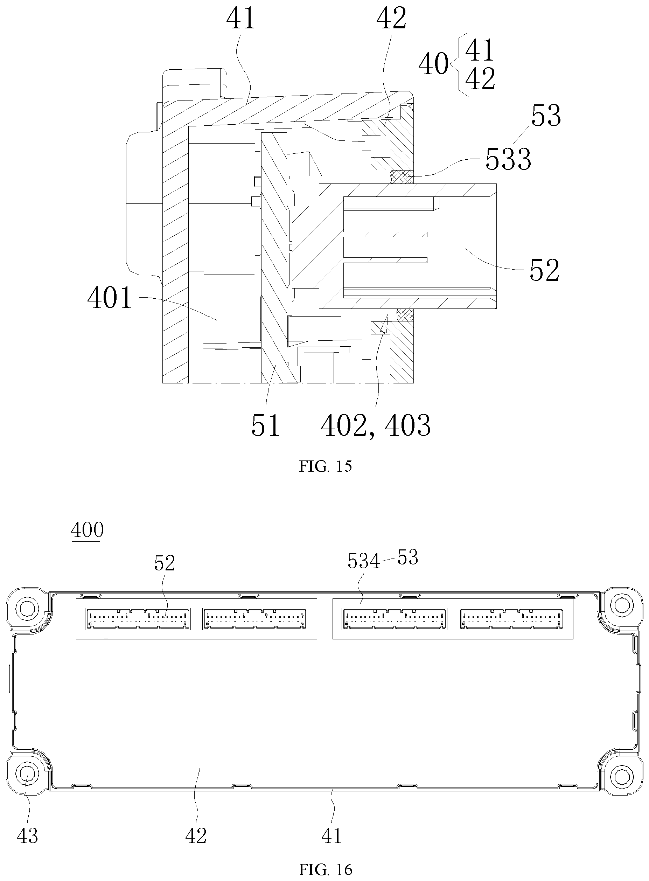

In some embodiments, referring to FIG. 15, the covering structure 53 includes a sealant 533 filled in the gap 403.

The sealant 533 refers to a type of adhesive that can seal a space between two adjacent side faces after curing.

By using the sealant 533, the gap 403 between the connector receptacle 52 and the side wall of the opening 402 can be well sealed, so that the electronic control assembly 400 meets requirements of the required protection level.

In some embodiments, referring to FIG. 16, the covering structure 53 includes a covering body 534. The covering body 534 is connected to the housing 40, and the covering body 534 at least partially covers the gap 403.

The covering body 534 refers to a plate-like or sheet-like member for covering the gap 403 between the connector receptacle 52 and the side wall of the opening 402. The covering body 534 may be made of a material such as metal, plastic, or rubber.

By using the covering body 534, the gap 403 between the connector receptacle 52 and the side wall of the opening 402 can be covered through the covering body 534, so that the electronic control assembly 400 meets requirements of the required protection level.

In some embodiments, the covering structure 53 may include an elastic member 531 and a sealant 533. In the case that the elastic member 531 covers at least a portion of the gap 403 between the connector receptacle 52 and the side wall of the opening 402, the sealant 533 may be filled in the gap 403 between the connector receptacle 52 and the side wall of the opening 402.

In some embodiments, the covering structure 53 may include a covering body 534 and a sealant 533. In the case that the covering body 534 covers at least a portion of the gap 403 between the connector receptacle 52 and the side wall of the opening 402, the sealant 533 may be filled in the gap 403 between the connector receptacle 52 and the side wall of the opening 402.

In some embodiments, the covering structure 53 may include an elastic member 531, a covering body 534, and a sealant 533. The elastic member 531 may be connected to the inner surface of the housing 40, the covering body 534 may be connected to the outer surface of the housing 40, and the sealant 533 may be filled in the gap 403 between the connector receptacle 52 and the side wall of the opening 402.

In some embodiments, the covering structure 53 may include an elastic member 531, a covering body 534, and a sealant 533. The elastic member 531, the covering body 534, and the sealant 533 may cooperate to cover or block the gap 403 on the peripheral side of the connector receptacle 52.

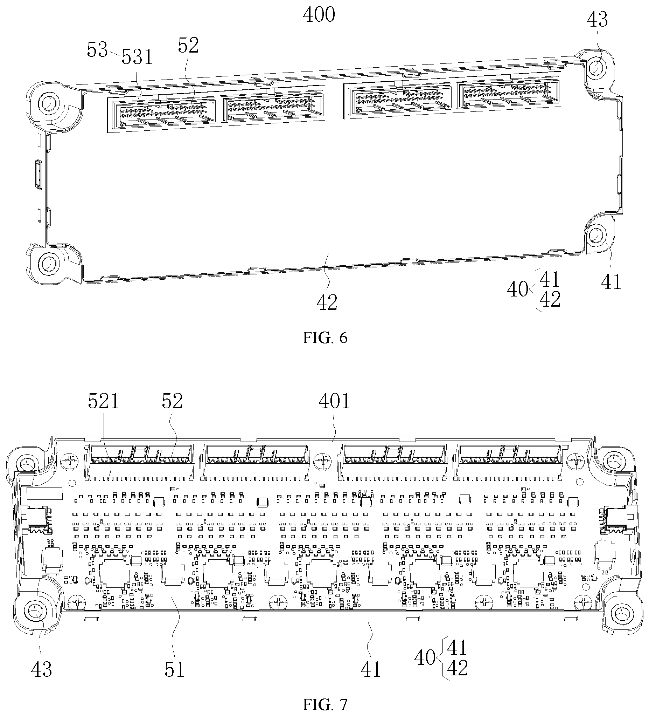

In some embodiments, referring to FIG. 6 to FIG. 8, pins 521 of the connector receptacle 52 are connected to the circuit board 51 through surface mount technology.

That pins 521 of the connector receptacle 52 are connected to the circuit board 51 through surface mount technology means that the pins 521 of the connector receptacle 52 are connected to corresponding weld legs on the circuit board 51 through surface mount technology.

The pins 521 of the connector receptacle 52 are connected to the circuit board 51 through surface mount technology, which is convenient for assembly and mass production.

In some embodiments, through holes may be provided at positions of the corresponding weld legs of the circuit board 51, and the pins 521 of the connector receptacle 52 adopt a pin structure to be inserted into the corresponding through holes and then connected through welding.

In some embodiments, the housing 40 includes a first case 41 and a second case 42, and the first case 41 and the second case 42 enclose the accommodating cavity 401. The first case 41 is provided with the opening 402, and/or the second case 42 is provided with the opening 402, and/or the first case 41 and the second case 42 are cooperatively provided with the opening 402.

The first case 41 refers to a case structure forming a partial structure of the housing 40. The second case 42 refers to a case structure that forms the entire housing 40 in combination with the first case 41. The first case 41 may be made of a material such as metal, plastic, ceramic, or rubber. The second case 42 may be made of a material such as metal, plastic, ceramic, or rubber.

As an example, the first case 41 may be a concave cavity with one side open, and the second case 42 is plate-like to cap the concave cavity, so that the concave cavity forms the accommodating cavity 401 of the housing 40. As an example, the second case 42 may be a concave cavity with one side open, and the first case 41 is plate-like to cap the concave cavity, so that the concave cavity forms the accommodating cavity 401 of the housing 40. As an example, the first case 41 and the second case 42 may each be a concave cavity with one side open, the open side of the first case 41 and the open side of the second case 42 are fastened to each other to form the housing 40, and the two concave cavities are combined to form the accommodating cavity 401.

As an example, in the case that there is one opening 402, the opening 402 may be provided only on the first case 41; the opening 402 may be provided only on the second case 42; and certainly, one portion of the opening 402 may be provided on the first case 41, and the other portion of the opening 402 may be provided on the second case 42, that is, the opening 402 is provided at the connection position between the first case 41 and the second case 42.

As an example, in the case that there are a plurality of openings 402, the plurality of openings 402 may be provided only on the first case 41; the plurality of openings 402 may be provided only on the second case 42; and certainly, a portion of the plurality of openings 402 may be provided on the first case 41, and the other portion of the plurality of openings 402 may be provided on the second case 42, that is, the plurality of openings 402 are provided at the connection position between the first case 41 and the second case 42.

As an example, in the case that there are a plurality of openings 402, the plurality of openings 402 may be provided on both the first case 41 and the second case 42. Certainly, the plurality of openings 402 may alternatively be provided on the first case 41, the second case 42, and the connection position between the first case 41 and the second case 42. The term "a/the plurality of" refers to two or more.

The foregoing housing 40 has a simple structure, is convenient to process and manufacture, and is further convenient to assemble the circuit board 51.

In some embodiments, the housing 40 includes the first case 41 and the second case 42, the covering structure 53 includes the elastic member 531, the elastic member 531 is integrally injection-molded with the housing 40, the elastic member 531 corresponding to the opening 402 in the first case 41 is integrally injection-molded with the first case 41, and the elastic member 531 corresponding to the opening 402 in the second case 42 is integrally injection-molded with the second case 42.

In some embodiments, the connector receptacle 52 may be rectangular, circular, or the like, which can be selected as needed.

In some embodiments, one connector receptacle 52 may be provided on the circuit board 51. Certainly, a plurality of connector receptacles 52 may be provided on the circuit board 51. The term "a/the plurality of" refers to two or more.

In some embodiments, there are a plurality of connector receptacles 52, and covering structures 53 corresponding to at least two adjacent connector receptacles 52 are connected into one piece.

The at least two adjacent connector receptacles 52 refer to two adjacent connector receptacles 52 or three adjacent equally-number connector receptacles 52 in the plurality of connector receptacles 52; certainly, the at least two adjacent connector receptacles 52 may be any two adjacent connector receptacles 52 in the plurality of connector receptacles 52; and the at least two adjacent connector receptacles 52 may be a group of connector receptacles 52, each group may be one or several connector receptacles 52, and when there are a plurality of connector receptacles 52 in a group, these connector receptacles 52 may be disposed adjacent to each other.

That covering structures 53 corresponding to at least two adjacent connector receptacles 52 are connected into one piece means that covering structures 53 corresponding to two or more adjacent connector receptacles 52 are connected into one piece, or covering structures 53 corresponding to any two adjacent connector receptacles 52 in the plurality of connector receptacles 52 are connected into one piece, or the plurality of connector receptacles 52 are grouped, and covering structures 53 corresponding to a plurality of connector receptacles 52 in each group are connected into one piece.

That covering structures 53 corresponding to at least two adjacent connector receptacles 52 are connected into one piece means that adjacent covering structures 53 may be integrally molded, or may be separately connected into one piece.

Covering structures 53 of at least two adjacent connector receptacles 52 are connected into one piece, which can facilitate connection and assembly of the covering structures 53 and the housing 40.

As an example, in the case where there are a plurality of connector receptacles 52, covering structures 53 corresponding to two or more adjacent connector receptacles 52 may alternatively be disposed at intervals.

In some embodiments, the housing 40 may be provided with an installing hole 43 to connect the housing 40 to a support medium, and then the electronic control assembly 400 is connected to the support medium through a fastener such as a bolt. The support medium may be the box body 20 or an external support member. The installing hole 43 refers to a through-hole structure disposed on the housing 40.

As an example, in the case that the housing 40 includes the first case 41 and the second case 42, the installing hole 43 may be provided on the first case 41, or may be provided on the second case 42, or may be provided at a joint of the first case 41 and the second case 42, in which case the installing hole 43 passes through the first case 41 and the second case 42.

According to some embodiments of the present application, the present application provides a battery apparatus 200, including a battery cell 300 and an electronic control assembly 400 electrically connected to the battery cell 300. The electronic control assembly 400 includes a housing 40, a circuit board 51, and a covering structure 53. The housing 40 is provided with an accommodating cavity 401; the circuit board 51 is installed in the accommodating cavity 401, and the circuit board 51 is provided with a connector receptacle 52; the housing 40 is provided with an opening 402 for the connector receptacle 52 to extend out; and the covering structure 53 includes an elastic member 531, an aperture 5310 is provided on the elastic member 531, the elastic member 531 is a rubber ring that surrounds the connector receptacle 52, one side of the rubber ring is adhesively connected to the housing 40, and the other side of the rubber ring is adhesively connected to the peripheral side of the connector receptacle 52.

The covering structure 53 uses a rubber ring that surrounds the connector receptacle 52, one side of the rubber ring is adhesively connected to the housing 40, and the other side of the rubber ring is adhesively connected to the peripheral side of the connector receptacle 52, so that the rubber ring seals the gap 403 on the peripheral side of the connector receptacle 52 to make the electronic control assembly 400 meet requirements of the required protection level.

According to some embodiments of the present application, the present application further provides an energy storage apparatus 14, including the battery apparatus 200 as described in the foregoing embodiments, and the battery apparatus 200 is used to store or provide electric energy.

According to some embodiments of the present application, the present application further provides an energy storage system 13, including a power conversion system 131 and the energy storage apparatus 14 as described in the foregoing embodiments, where the power conversion system 131 is electrically connected between a power generation apparatus 132 and the energy storage apparatus 14.

According to some embodiments of the present application, the present application further provides an electric apparatus, including the battery apparatus 200 as described in the foregoing embodiments, the energy storage apparatus 14 as described in the foregoing embodiments, or the energy storage system 13 as described in the foregoing embodiments, where the battery apparatus 200 is used to store or provide electric energy.

According to some embodiments of the present application, the present application further provides a charging network 12, including a charging pile 121 and the energy storage apparatus 14 as described in the foregoing embodiments or the energy storage system 13 as described in the foregoing embodiments, where the energy storage apparatus 14 is used to provide electric energy for the charging pile 121.

Finally, it should be noted that: the foregoing embodiments are merely used to describe the technical solutions of the present application, but not to limit the technical solutions. Although the present application is described in detail with reference to the foregoing embodiments, those of ordinary skill in the art should understand that: the technical solutions described in the foregoing embodiments can still be modified, or some or all of the technical features can be replaced equivalently. These modifications or replacements do not cause the essence of the corresponding technical solutions to depart from the scope of the technical solutions of the embodiments of the present application, and should be covered within the scope of the claims and the specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery apparatus, comprising a battery cell and an electronic control assembly electrically connected to the battery cell, wherein the electronic control assembly comprises:
a circuit board, wherein the circuit board is provided with a connector receptacle;
a housing provided with an accommodating cavity, wherein the circuit board is installed in the accommodating cavity, and the housing is provided with an opening for the connector receptacle to extend out; and
a covering structure disposed on the housing and surrounding the connector receptacle, wherein the covering structure at least partially covers a gap between the connector receptacle and a side wall of the opening.

2. The battery apparatus according to claim 1, wherein the covering structure comprises an elastic member, one side of the elastic member is connected to the housing, and the other side of the elastic member at least partially covers the gap.

3. The battery apparatus according to claim 2, wherein at least one side of the connector receptacle is provided with the elastic member, one side of the elastic member is connected to the housing, and the other side of the elastic member covers at least a portion of the gap on the corresponding side of the connector receptacle.

4. The battery apparatus according to claim 2 or 3, wherein the side that is of the elastic member and that is close to the connector receptacle is connected to a rigid member.

5. The battery apparatus according to claim 4, wherein the rigid member extends to a position between the connector receptacle and the side wall of the opening.

6. The battery apparatus according to claim 4 or 5, wherein the rigid member is integrally injection-molded with the elastic member.

7. The battery apparatus according to any one of claims 4 to 6, wherein the rigid member has an inner bore, and the connector receptacle passes through the inner bore, so that the rigid member is fittingly sleeved onto the connector receptacle.

8. The battery apparatus according to claim 7, wherein the difference between the distance between two opposite side walls of the inner bore and the distance between two corresponding opposite sides of the connector receptacle is less than or equal to 1 mm.

9. The battery apparatus according to any one of claims 4 to 6, wherein there are a plurality of rigid members, and the plurality of rigid members cooperate to surround the connector receptacle.

10. The battery apparatus according to claim 2 or 3, wherein the elastic member elastically abuts against the connector receptacle.

11. The battery apparatus according to claim 9, wherein the elastic member is provided with an aperture for the connector receptacle to pass through.

12. The battery apparatus according to claim 11, wherein the elastic member is an elastic film, or the elastic member is a rubber ring.

13. The battery apparatus according to any one of claims 2 to 12, wherein the elastic member is adhesively connected to the housing.

14. The battery apparatus according to any one of claims 2 to 13, wherein the elastic member is integrally injection-molded with the housing.

15. The battery apparatus according to any one of claims 2 to 14, wherein the elastic member comprises a connection portion and an extension portion, a side of the connection portion is connected to the housing, the extension portion is connected to the side that is of the connection portion and that is close to the connector receptacle, and the extension portion extends in the thickness direction of the connection portion.

16. The battery apparatus according to claim 15, wherein the connection portion is connected to the surface that is of the housing and that faces away from the circuit board, or the connection portion is connected to the surface that is of the housing and that faces the circuit board.

17. The battery apparatus according to any one of claims 1 to 16, wherein the covering structure is adhesively connected to a side wall of the connector receptacle.

18. The battery apparatus according to any one of claims 1 to 17, wherein the covering structure comprises a sealant filled in the gap.

19. The battery apparatus according to any one of claims 1 to 18, wherein the covering structure comprises a covering body, the covering body is connected to the lid body, and the covering body at least partially covers the gap.

20. The battery apparatus according to any one of claims 1 to 19, wherein the housing comprises a first case and a second case, and the first case and the second case enclose the accommodating cavity; and the first case is provided with the opening, and/or the second case is provided with the opening, and/or the first case and the second case are cooperatively provided with the opening.

21. The battery apparatus according to any one of claims 1 to 20, wherein there are a plurality of connector receptacles, and covering structures corresponding to at least two adjacent connector receptacles are connected into one piece.

22. An energy storage apparatus, comprising the battery apparatus according to any one of claims 1 to 21, wherein the battery apparatus is used to store or provide electric energy.

23. An electric apparatus, comprising the battery apparatus according to any one of claims 1 to 21 or the energy storage apparatus according to claim 22, wherein the battery apparatus is used to store or provide electric energy.
